# EUROPÄISCHE PATENTANMELDUNG

(11) **EP 2 099 097 A1**
(43) Veröffentlichungstag der Anmeldung: **09.09.2009**
(21) Anmeldenummer: 09153402.4
(22) Anmeldetag: 23.02.2009
(51) Int. Cl.: H01R 9/22, H01R 13/506, H01R 13/516, H02G 3/08, H02G 15/113

(54) **Verbindungsvorrichtung für die Leiter von zwei Kabeln**

(30) Priorität: 08.03.2008 DE 202008003294 U
(71) Anmelder: Weidmüller Interface GmbH & Co. KG, 32758 Detmold (DE)
(72) Erfinder: Nickol, Marcell, 99831, Creuzburg / Scherbda (DE)
(74) Vertreter: Dantz, Jan Henning

(57) **Zusammenfassung**

Verbindungsvorrichtung (1) für die Leiter (7) von zwei Kabeln, die ein Gehäuse mit einem Grundteil (2) und einem Deckelteil (3) aufweist, die über ein oder mehrere Scharnier miteinander verbunden und über Rastelemente (11) miteinander verriegelbar sind, wobei in dem Gehäuse zur Verbindung der Leiter (7) ein als Steckverbinder ausgebildeter Anschlussblock (4) installiert ist, der eine bestimmte Anzahl von vorzugsweise paarweise leitend miteinander verbundenen Leiteranschlüssen aufweist.

## Beschreibung

Die Erfindung betrifft eine Verbindungsvorrichtung für die Leiter von zwei Kabeln nach dem Oberbegriff des Anspruchs 1.

Derartige Verbindungsvorrichtungen sind aus dem Stand der Technik an sich bekannt. Ihre Handhabung ist aber oftmals relativ unpraktisch. Darüber hinaus wird oftmals nur mit aufwendigen Mitteln eine hohe Schutzklasse wie IP 67 erreicht.

Der Erfindung liegt die Aufgabe zugrunde, eine Verbindungsvorrichtung der eingangs näher beschriebenen Art zu schaffen, die optimal zu handhaben ist, und die kompakt aufgebaut sowie auf einfache Weise eine größtmögliche Dichtigkeitsklasse erzielt.

Diese Aufgabe wird erfindungsgemäß dadurch gelöst, dass in dem Gehäuse zur Verbindung der Leiter der Kabel ein Anschlussblock installiert ist, der eine bestimmte Anzahl von paarweise leitend miteinander verbundenen Leiteranschlüssen aufweist.

Da nunmehr ein Anschlussblock mit Leiteranschlüssen zur Verbindung der Leiter eingesetzt wird, kann das umgebende Gehäuse äußerst kompakt aufgebaut sein, so dass es besonders optimal zu handhaben ist.

Es wird zudem in bevorzugter Ausgestaltung auch die Dichtungsklasse IP 67 erreicht.

Dazu wird der Anschlussblock vorzugsweise als Steckverbinder in der Schutzklasse IP20 ausgeführt und von dem Gehäuse vorzugsweise in der Schutzklasse IP67 aufgenommen.

Die Verbindung der einzelnen Leiter der Kabel wird noch zusätzlich erleichtert, wenn die Leiteranschlüsse als Direktsteck (Push-In) -Kontakte, insbesondere als Doppelkontakte oder Drei-Zungen-Kontakte ausgebildet sind.

Für die Verbindung der Leiter ist es vorteilhaft, wenn die Kabel durch einander gegenüberliegende Öffnungen des Gehäuses geführt sind. Die Adern liegen dann im Abstand zueinander, so dass die Handhabung besonders einfach wird.

Da häufig die Verbindungsvorrichtung an Bauteilen festzulegen ist, ist vorgesehen, dass vorzugsweise am Grundteil des Gehäuses mindestens eine Befestigungslasche, vorzugsweise jedoch zwei einander gegenüberliegende Befestigungslaschen angesetzt oder angeformt sind. Damit das Grundteil und das Deckelteil unverlierbar miteinander verbunden sind, dass jedoch die Verbindung der beiden Teile miteinander in einfachster Weise erfolgen kann, ist vorgesehen, dass das Grundteil und das Deckelteil über Filmscharniere miteinander verbunden sind.

Die einander zugeordneten Randbereiche des Grundteiles und des Deckelteiles können so aufeinander abgestimmt und so gestaltet sein, dass die geforderte Dichtigkeit erreicht wird. Darüber hinaus ist dann noch vorgesehen, dass in die Bohrungen auf die Kabeldurchmesser abgestimmte Dichtungsringe eingesetzt sind. Da auch unterschiedliche Kabel mittels der Verbindungsvorrichtung verbunden werden können, ist es trotzdem möglich, dass das Grundteil und das Deckelteil auf den größten Kabeldurchmesser abgestimmt sind, da dann entsprechende Dichtungsringe mit den entsprechenden Innendurchmessern verwendet werden können. Zweckmäßigerweise erstrecken sich die Bohrungen beidseitig der Trennebene in spiegelbildlicher Ausführung.

Anhand der beiliegenden Zeichnungen wird die Erfindung noch näher erläutert.

Es zeigen:
- Figur 1: die erfindungsgemäße Verbindungsvorrichtung mit vollständig geöffnetem Deckelteil in einer perspektivischen Darstellung;
- Figur 2: eine der Figur 1 entsprechende Darstellung jedoch mit dem De- ckelteil in einer Zwischenstellung;
- Figur 3: die Verbindungsvorrichtung gemäß den Figuren 1 und 2 in der Schließstellung des Deckelteiles;
- Figur 4: die Verbindungsvorrichtung in einer flach gelegten Stellung mit Blick auf eine Schmalseite;
- Figur 5: die Verbindungsvorrichtung mit Blick auf eine Breitseite im ge- schlossenen Zustand des Gehäuses;
- Figur 6: die Verbindungsvorrichtung in einer Ansicht mit Blick auf die Breitseite und geöffnetem Gehäuse;
- Figur 7: eine der Figur 6 entsprechende Seitenansicht mit Blick auf die Schmalseite bei geöffnetem Deckelteil;
- Figur 8: die Verbindungsvorrichtung in einer perspektivischen Darstel- lung mit geöffnetem Deckelteil;
- Figur 9: eine weitere Ansicht, bei der das Deckelteil und des Grundteil schwenkbar am Anschlusselement angelenkt sind, mit Blick auf die Schmalseiten des Deckelteiles und des Grundteiles;
- Figur 10: eine der Figur 9 entsprechende Darstellung mit Blick auf die Breitseiten;
- Figur 11: eine den Figuren 9 und 10 entsprechende perspektivische Dar- stellung; und
- Figuren 12 bis 14: den Figuren 9 bis 11 entsprechende Darstellungen, jedoch mit angeschlossenen Leitern.

Die in den Figuren dargestellten Verbindungsvorrichtungen 1 weisen ein Gehäuse vorzugsweise der Schutzklasse IP67 auf, welches aus einem Grundteil 2 und einem Deckelteil 3 besteht, die im miteinander verbundenen Zustand als geschlossen angesehen werden können und dicht sind. Innerhalb des Grundteiles 2 ist ein vorzugsweise als Standard-Steckverbinder ausgebildeter Anschlussblock 4 der Schutzklasse IP20 installiert, der im dargestellten Ausführungsbeispiel für die leitende Verbindung der Leiter 7 von zwei Kabeln 5, 6 ausgelegt ist.

Jedes Kabel 5, 6 ist im dargestellten Ausführungsbeispiel mehradrig ausgeführt und enthält demzufolge in einem Kabelmantel mehr als zwei, hier beispielhaft drei Leiter 7. Demzufolge enthält auch der Anschlussblock 4 zumindest sechs allgemein bekannte Leiteranschlüsse, insbesondere paarweise leitend miteinander verbundene Direktsteck-Druckfederkontakte, die hier als Doppelkontakte oder Drei-Zungen-Kontakte ausgebildet sind.

Die Kabel 5, 6 sind durch Bohrungen geführt, die sich beidseitig über die Trennebene zwischen dem Grundteil 2 und dem Deckelteil 3 erstrecken. Wie die Figuren zeigen, sind zur Erzielung der notwendigen Abdichtung in die Bohrungen Dichtringe 8 eingesetzt. Die Innendurchmesser dieser Dichtringe 8 richten sich nach den Außendurchmessern der Kabel 5, 6.

Zur Befestigung der Verbindungsvorrichtung 1 sind im dargestellten Ausführungsbeispiel an das Grundteil 2 zwei fluchtend zueinander stehende Befestigungslaschen 9, 10 angeformt. Jede Befestigungslasche ist dazu noch mit einer Durchgangsbohrung versehen, um beispielsweise eine Schraube hindurchzuführen.

Zur Verbindung des Grundteiles 2 mit dem Deckelteil 3 sind im dargestellten Ausführungsbeispiel am Deckelteil 3 vier federnde Rastzungen 11 angeformt, die gegenüber dem die Öffnung begrenzenden Rand vorstehen. Diese Rastzungen 11 hintergreifen in der Schließlage des Deckelteiles 3 entsprechende Rastvorsprünge.

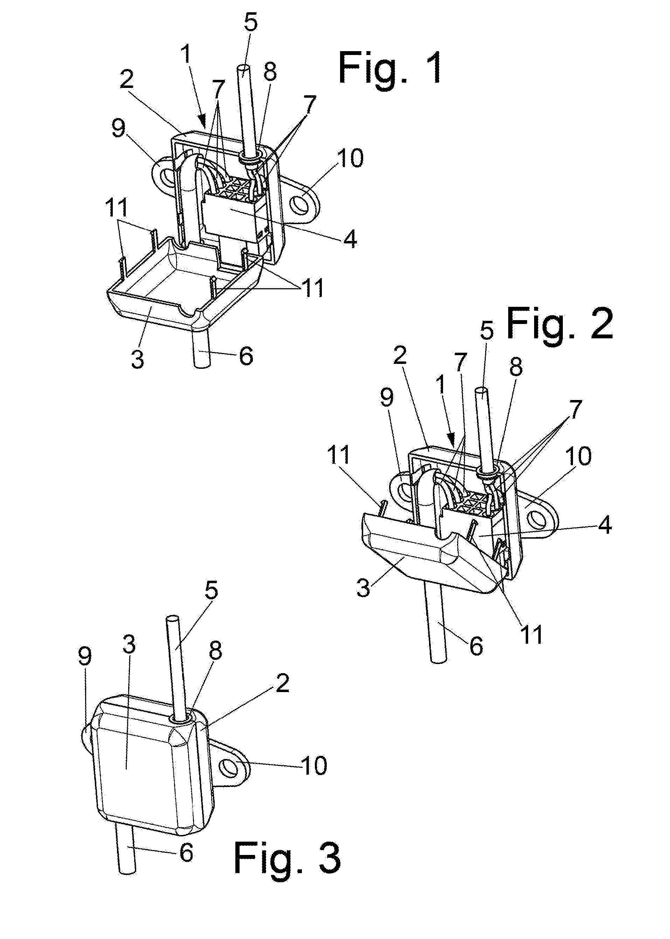

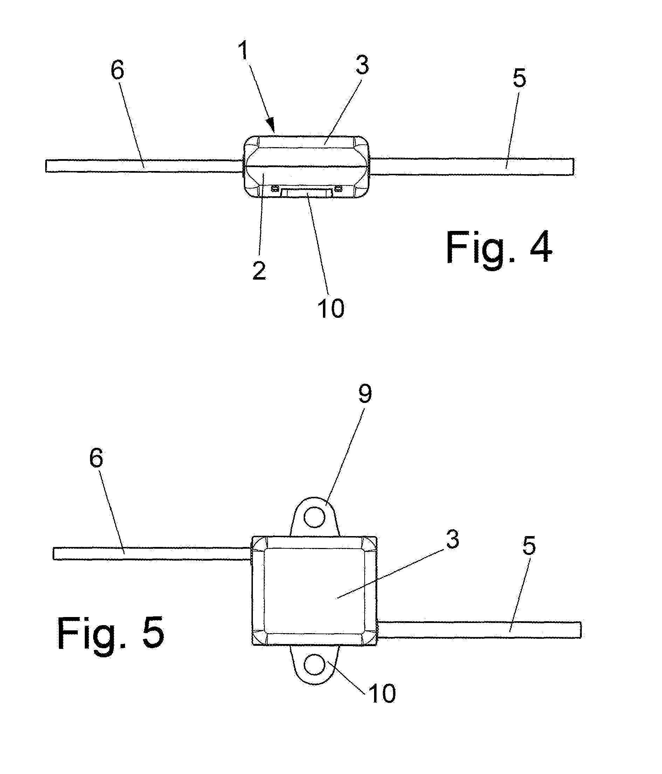

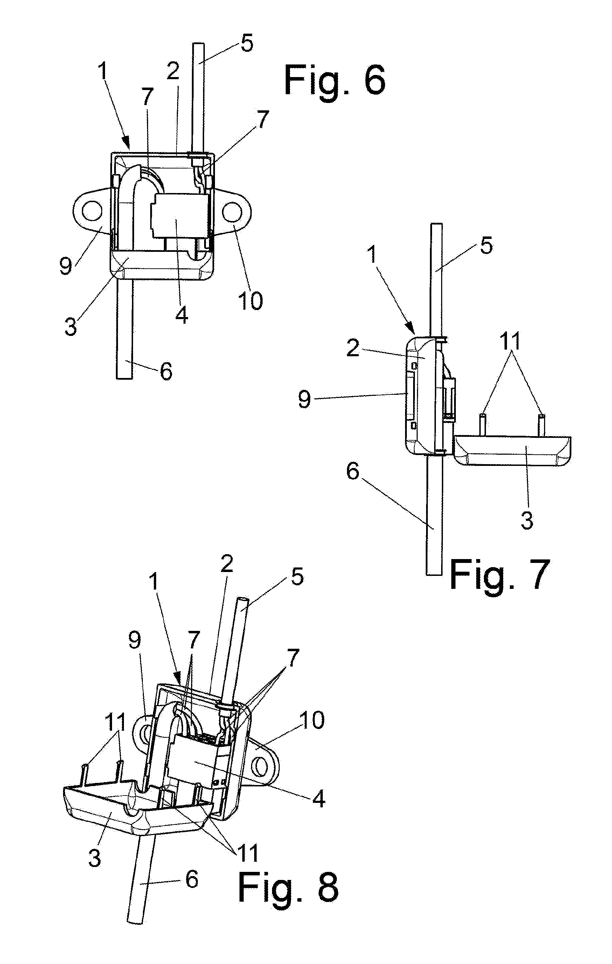

Die Figuren 5 und 6 zeigen die Verbindungsvorrichtung 1 im geschlossenen Zustand gemäß der Figur 3 in einer Seitenansicht und in einer Draufsicht. Daraus ergibt sich, dass die Tiefe des aus dem Grundteil 2 und dem Deckelteil 3 gebildeten Gehäuses wesentlich geringer ist als die Kontur in der Draufsicht. Im dargestellten Ausführungsbeispiel sind in der Draufsicht das Grundteil 2 und das Deckelteil 3 quadratisch ausgebildet, wobei die Kanten gerundet sind.

Die Figur 6 entspricht inhaltlich der Figur 1, ist jedoch in einer Vorderansicht mit geöffnetem Deckelteil 3 dargestellt, während die Darstellung nach der Figur 7 die Verbindungsvorrichtung 1 in einer Seitenansicht mit geöffnetem Deckel zeigt.

Die Figur 8 zeigt inhaltlich die Verbindungsvorrichtung 1 entsprechend der Figur 1, jedoch in einer Schräglage der beiden Kabel 5 und 6.

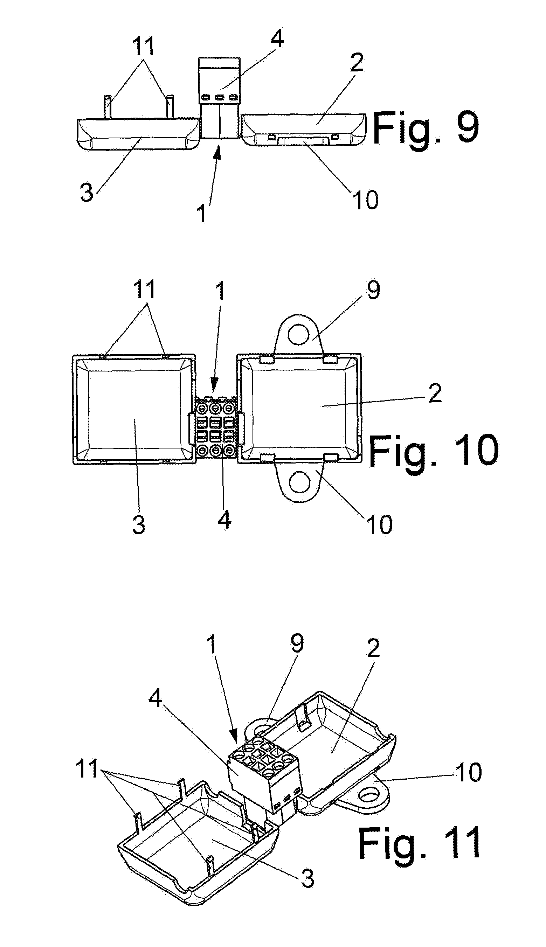

Die Figuren 9 bis 11 zeigen eine Ausführung, bei der auch das Grundteil 2 mittels Filmscharnieren an den Anschlussblock 4 angelenkt ist. Die Kabel 5, 6 sind nicht dargestellt, so dass auch die Leiter 7 nicht an den Anschlussblock 4 angeschlossen sind. Die Figur 9 zeigt die Verbindungsvorrichtung 1 im beidseitig offenen Zustand in einer Seitenansicht, während die Figur 10 die Verbindungsvorrichtung 1 beidseitig offen in einer Draufsicht zeigt. Die Figur 11 zeigt die Verbindungsvorrichtung 1 in einer perspektivischen Darstellung im beidseitig geöffneten Zustand.

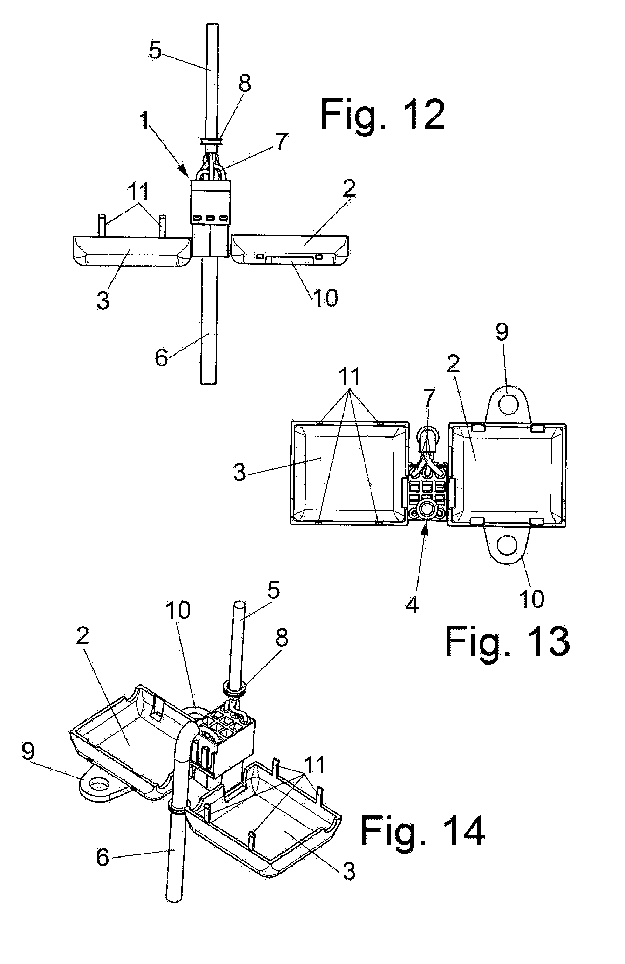

Die Figuren 12 bis 14 entsprechen von der Stellung der Verbindungsvorrichtung 1 her den Darstellungen gemäß den Figuren 9 bis 11, jedoch sind die Kabel 5, 6 mit ihren Leitern 7 an den Anschlussblock 4 angeschlossen.

Der Anschlussblock 4 und das Gehäuse können in allen IP-Schutzklassen ausgeführt sein. Vorzugsweise ist jedoch der Anschlussblock 4 in der Schutzklasse IP 20 und das Gehäuse in der Schutzklasse IP 67 ausgeführt.

Die Erfindung ist nicht auf das dargestellte Ausführungsbeispiel beschränkt. Wesentlich ist, dass in dem aus dem Grundteil 2 und dem Deckelteil 3 gebildeten Gehäuse zur Verbindung der Leiter 7 von Kabeln 5, 6 ein Anschlussblock 4 installiert ist, der eine bestimmte Anzahl von Leiteranschlüssen, vorzugsweise in Form von Doppelkontakten oder Drei-Zungen-Kontakten aufweist.

## Patentansprüche

1. Verbindungsvorrichtung (1) für die Leiter (7) von zwei Kabeln, die ein Gehäuse mit einem Grundteil (2) und einem Deckelteil (3) aufweist, die über ein oder mehrere Scharnier miteinander verbunden und über Rastelemente (11) miteinander verriegelbar sind, **dadurch gekennzeichnet, dass** in dem Gehäuse zur Verbindung der Leiter (7) ein als Steckverbinder ausgebildeter Anschlussblock (4) installiert ist, der eine bestimmte Anzahl von vorzugsweise paarweise leitend miteinander verbundenen Leiteranschlüssen aufweist.

2. Verbindungsvorrichtung nach Anspruch 1, **dadurch gekennzeichnet, dass** die Leiteranschlüsse als Doppelkontakte oder Drei-Zungen-Kontakte ausgebildet sind.

3. Verbindungsvorrichtung nach Anspruch 1 oder 2, **dadurch gekennzeichnet, dass** die Leiteranschlüsse mehrere Direktsteck-Druckfederkontakte aufweisen.

4. Verbindungsvorrichtung nach Anspruch 1, **dadurch gekennzeichnet, dass** die Kabel durch einander gegenüberliegende und zueinander versetzte Öffnungen des Gehäuses geführt sind.

5. Verbindungsvorrichtung nach einem oder mehreren der vorstehenden Ansprüche, **dadurch gekennzeichnet, dass** vorzugsweise am Grundteil (2) des Gehäuses mindestens eine Befestigungslasche, vorzugsweise jedoch zwei zueinander fluchtende Befestigungslaschen (9, 10) angesetzt oder angeformt sind.

6. Verbindungsvorrichtung nach einem oder mehreren der vorstehenden Ansprüche, **dadurch gekennzeichnet, dass** das Grundteil (2) und das Deckelteil (3) über Filmscharniere miteinander verbunden sind.

7. Verbindungsvorrichtung nach einem oder mehreren der vorstehenden Ansprüche, **dadurch gekennzeichnet, dass** in die Bohrungen des Gehäuses auf die Durchmesser der Kabel (5, 6) abgestimmte Dichtungsringe (8) eingesetzt sind.

8. Verbindungsvorrichtung nach einem oder mehreren der vorstehenden Ansprüche, **dadurch gekennzeichnet, dass** vorzugsweise am Deckelteil (3) mehrere Rastzungen (11) angeformt oder angesetzt sind.

9. Verbindungsvorrichtung nach einem oder mehreren der vorstehenden Ansprüche, **dadurch gekennzeichnet, dass** das Grundteil (2) und das Deckelteil (3), in Draufsichten gesehen, viereckig, vorzugsweise quadratisch ausgebildet sind.

10. Verbindungsvorrichtung nach einem oder mehreren der vorstehenden Ansprüche, **dadurch gekennzeichnet, dass** das Grundteil (2) und das Deckelteil (3) an dem Anschlussblock (4) schwenkbar angelenkt sind.

11. Verbindungsvorrichtung nach einem oder mehreren der vorstehenden Ansprüche, **dadurch gekennzeichnet, dass** der Anschlussblock (4) als Steckverbinder in der Schutzklasse IP20 ausgeführt ist.

12. Verbindungsvorrichtung nach einem oder mehreren der vorstehenden Ansprüche, **dadurch gekennzeichnet, dass** das Gehäuse in der Schutzklasse IP67 ausgeführt ist.
